# EUROPÄISCHE PATENTSCHRIFT

(11) **EP 0 498 860 B1**
(45) Veröffentlichungstag und Bekanntmachung des Hinweises auf die Patenterteilung: **14.09.1994**
(21) Anmeldenummer: 91912463.6
(22) Anmeldetag: 12.07.1991
(51) Int. Cl.: F16D 65/095, F16D 55/226

(54) **SCHWIMMSATTEL UND BREMSKLOTZ FÜR TEILBELAGSCHEIBENBREMSEN**
FLOATING CALIPER AND BRAKE PAD FOR PARTLY LINED DISC BRAKES
ETRIER FLOTTANT ET PLAQUETTE DE FREINS A DISQUE A GARNITURE PARTIELLE

(30) Priorität: 31.08.1990 DE 4027563
(43) Veröffentlichungstag der Anmeldung: 19.08.1992
(73) Patentinhaber: ITT Automotive Europe GmbH, 60488 Frankfurt (DE)
(72) Erfinder: THIEL, Rudolf, D-6000 Frankfurt/Main 90 (DE); KLIMT, Ulrich, D-6114 Gross-Umstadt (DE); DÖLL, Andreas, D-6000 Frankfurt/Main 1 (DE)
(86) Internationale Anmeldenummer: EP9101309
(87) Internationale Veröffentlichungsnummer: WO9204553

(56) Entgegenhaltungen:
- EP-A- 0 119 466
- EP-A- 0 145 593
- EP-A- 0 341 392
- EP-A- 0 341 610
- EP-A- 0 347 523
- DE-A- 3 014 057

## Beschreibung

Die Erfindung betrifft die Abstützung eines Schwimmsattels einer Teilbelag-Scheibenbremse an einem axial äußeren Bremsklotz.

Bei einer Teilbelagscheibenbremse gemäß dem Oberbegriff des Patentanspruchs 1 ist ein Schwimmsattel an einem Bremsträger axial verschiebbar gelagert, indem er auf seiner axial inneren Seite mittels Bolzenführungen auf zwei am Bremsträger verankerten axialen Bolzen gleitet und auf seiner axial äußeren Seite über einen Bremsklotz an den Tragarmen des Bremsträgers abgestützt ist. Diese Abstützung ist zur genauen Fixierung der Einbaulage des Schwimmsattels nötig, da die Bolzenführungen auf den Bolzen ein konstruktionsbedingtes Spiel aufweisen. Um ein Klappern des Schwimmsattels in seinen Führungen zu verhindern, ist dieser mittels einer Gehäusefeder gegen den Bremsträger verspannt.

Eine gattungsgemäße Teilbelagscheibenbremse ist aus der DE-OS 30 14 057 bekannt. Hier ist der Schwimmsattel über zwei Tragteile des axial äußeren Bremsklotzes in radialer und tangentialer Richtung zur Bremsscheibe am Bremsträger abgestützt. Zur Abstützung in tangentialer Richtung sind die Tragteile des Bremsklotzes mit Ansätzen versehen, die den Schwimmsattel seitlich umgreifen und in Umfangsrichtung zwischen dem Schwimmsattel und den Tragarmen des Bremsträgers liegen. Der Schwimmsattel reicht deshalb in Umfangsrichtung nicht bis an die Tragarme heran und weist nicht die maximal mögliche Breite auf, so daß seine Steifigkeit nachteilig vermindert ist.

Eine weitere gattungsgemäße Teilbelagscheibenbremse ist aus der EP 0 341 610 bekannt. Bei einer Ausführungsform ist hier der Schwimmsattel an einem Punkt in der Mitte des axial äußeren Bremsklotzes abgestützt. Dieser ist für diesen Zweck mit einem radial nach außen weisenden und vorzugsweise halbkreisförmigen Vorsprung ausgestattet, der in eine halbkreisförmige Ausnehmung des Schwimmsattels eingreift. Im Gegensatz zu der zuerst genannten Scheibenbremse liegt hier der Schwimmsattel nicht an den seitlichen Tragteilen des Bremsklotzes an, sondern überragt diese in Umfangsrichtung, wodurch er vorteilhaft verbreitert ist. Allerdings ist die seitliche Führung des Schwimmsattels an dem halbkreisförmigen Vorsprung des Bremsklotzes weniger zuverlässig. In bestimmten Einbaulagen der Bremse am Fahrzeug, beispielsweise hinter der Radachse, kann das durch den Fahrbetrieb bedingte Rütteln dazu führen, daß sich der Schwimmsattel aufgrund des Spiels in seiner Bolzenführung tangential zur Bremsscheibe seitlich verschiebt, wobei er von dem halbkreisförmigen Vorsprung des Bremsklotzes in radiale Richtung gedrückt und verklemmt wird.

Die Erfindung geht aus von einer Teilbelagscheibenbremse gemäß dem Oberbegriff des Patentanspruchs 1 und hat sich zur Aufgabe gemacht, die genannten Nachteile bekannter Anordnungen zu vermeiden und ihre Vorteile zu vereinen, also eine Teilbelagscheibenbremse zu schaffen, deren Schwimmsattel die maximale Gehäusebreite ausnutzt und in jeder Einbaulage sicher geführt ist.

Die gestellte Aufgabe wird gemäß den Merkmalen des Hauptanspruchs gelöst. Die erfindungsgemäße Lösung besteht im Prinzip darin, an den in Umfangsrichtung liegenden Seiten des maximale Gehäusebreite aufweisenden Schwimmsattels axial verlaufende Nuten vorzusehen und die Tragteile des axial äußeren Bremsklotzes mit Ansätzen auszustatten, die in diese Nuten eingreifen und durch eine Gehäusefeder fest gegen den Nutboden gedrückt werden. Durch die mit den genannten Ansätzen in Anlage befindlichen Nutwände wird der Schwimmsattel in tangentialer Richtung unverschiebbar abgestützt. Die Steifigkeit des Sattelgehäuses wird durch das Einbringen der Nuten im wesentlichen nicht beeinträchtigt. In der erfindungsgemäßen Schwimmsattel-Teilbelagscheibenbremse sind also die Vorzüge einer erhöhten Sattelsteifigkeit und einer sicheren Sattelführung miteinander vereint.

Besonders vorteilhaft ist eine Ausführungsform gemäß Anspruch 2, bei der die Nutböden und mindestens je eine Nutwand als bearbeitete, ebene und im wesentlichen aufeinander senkrecht stehende Stützflächen ausgebildet sind. Dabei wird eine sichere Abstützung des Schwimmsattels mit möglichst geringem Spiel geschaffen, wodurch wiederum die Tiefe der Nuten und die damit verbundene Minderung der Gehäusesteifigkeit extrem gering gehalten werden kann. Aufgrund der im wesentlichen rechtwinklig ausgerichteten Stützflächen ist ein Ausheben und Verklemmen des Schwimmsattels nicht mehr möglich.

Durch die in Anspruch 3 offenbarte Maßnahme wird die Fertigung der erfindungsgemäßen Nuten vereinfacht und die damit verbundenen Kosten gesenkt.

Mit Anspruch 4 wird auch für einen erfindungsgemäß ausgestalteten Bremsklotz um Schutz ersucht.

Zwei Ausführungsbeispiele der Erfindung werden nachfolgend anhand einer Zeichnung näher erläutert.

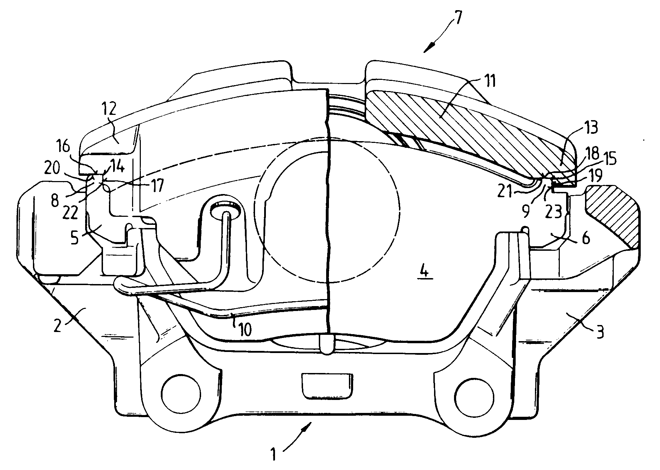

Die einzige Figur zeigt eine teilweise geschnittene Schwimmsattel-Teilbelagscheibenbremse. In der linken Hälfte ist ein erstes und in der rechten Hälfte ein zweites Ausführungsbeispiel dargestellt.

Der Bremsträger 1 besitzt zwei Tragarme 2,3 mit Führungsflächen, an denen der axial äußere Bremsklotz 4 und der nicht gezeigte, axial innere Bremsklotz in axialer Richtung, d.h. senkrecht zur Papierebene beweglich geführt sind. Die Bremsklötze 4 sind mit seitlich wegstehenden Tragteilen 5,6 ausgestattet, die mehrere zur Anlage an zugehörige Führungsflächen der Tragarme 2,3 des Bremsträgers 1 bestimmte Anlageflächen aufweisen, über die die Bremsklötze 4 an den Tragarmen 2,3 in Umfangsrichtung der Bremsscheibe und in radialer Richtung fest abgestützt, axial aber verschiebbar geführt werden, wobei die Anlageflächen der Tragteile 5,6 so angeordnet sind und mit den Tragarmen 2,3 derart zusammenwirken, daß zumindest bei großen Bremsanlegekräften die an einem Bremsklotz 4 auftretende Reibungskraft auf beide Tragarme 2,3 übertragen wird. Genauer gesagt, besitzt jedes Tragteil 5,6 eine von der Bremsklotzmitte aus in Umfangsrichtung der Bremsscheibe gesehen äußere und eine innere Anlagefläche, wobei die äußere Anlagefläche radial außerhalb und die innere radial innerhalb des Umfangs der Bremsscheibe angeordnet ist. Bei großen Bremsanlegekräften liegt die äußere Anlagefläche des scheibenauslaufseitigen Tragteils am scheibenauslaufseitigen Bremsträgerarm und die innere Anlagefläche des scheibeneinlaufseitigen Tragteils am scheibeneinlaufseitigen Bremsträgerarm an. Das scheibenauslaufseitige Tragteil wird dabei auf Druck und das scheibeneinlaufseitige Tragteil auf Zug beansprucht (Push-Pull-Prinzip). Der zum Andruck der Bremsklötze 4 an die nicht gezeigte Bremsscheibe bestimmte Schwimmsattel 7 ist am Bremsträger 1 über nicht gezeigte Bolzen axial verschiebbar gelagert und an seiner axial äußeren Seite an zwei Ansätzen 8,9 der Tragteile 5,6 abgestützt, an die er durch eine Gehäusefeder 10 radial angedrückt wird. Der Schwimmsattel weist eine Sattelbrücke 11 auf, deren Ausläufer 12,13 in Umfangsrichtung der Bremsscheibe bis über die Tragteile 5,6 der Bremsklötze 4 ragen und zur Versteifung der Sattelbrücke 11 beitragen. Die Ausläufer 12,13 sind auf der den Ansätzen 8,9 zugewandten Seite mit axial verlaufenden Nuten 14,15 versehen, in die die Ansätze 8,9 hineinragen. Die Nuten 14,15 weisen je zwei bearbeitete, ebene Stützflächen 16,17 und 18,19 auf, die aufeinander senkrecht stehen. Die erste Stützfläche 16,18 ist mit der zugehörigen Stirnfläche 20,21 des jeweiligen Ansatzes 8,9 in Anlage, wodurch der Schwimmsattel in radialer Richtung abgestützt wird. Zur Abstützung in Umfangsrichtung ist jeweils eine zweite Stützfläche 17,19 vorgesehen, die auf der ersten Stützfläche 16,18 senkrecht steht und mit einer der zugehörigen Seitenflächen 22,23 des jeweiligen Ansatzes 8,9 in Anlage kommt. Da die Stützflächen 16,18 und die Stützflächen 17,19 jeweils aufeinander senkrecht stehen, besteht keine Gefahr, daß der Schwimmsattel 7 aushebt und verklemmt. Bei dem auf der linken Seite der Figur dargestellten ersten Ausführungsbeispiel ist die Nut 14 seitlich nach außen, in der Zeichnung nach links hin offen, um eine einfache Fertigung zu ermöglichen. Die nicht gezeigte, auf der rechten Seite liegende Nut dieses ersten Ausführungsbeispiels ist ebenfalls seitlich nach außen, also nach rechts hin offen. Bei dem auf der rechten Seite der Figur dargestellten zweiten Ausführungsbeispiel ist die Nut 15 seitlich nach innen, in der Zeichnung nach links hin offen. Die nicht gezeigte, auf der linken Seite liegende Nut des zweiten Ausführungsbeispiels ist ebenfalls seitlich nach innen, also nach rechts hin offen. Da der Schwimmsattel 7 nur am axial äußeren und nicht am axial inneren Bremsklotz abgestützt sein soll, ist der axial innere Bremsklotz entweder ohne die erfindungsgemäßen Ansätze an seinen Tragteilen ausgeführt oder der Schwimmsattel 7 ist an entsprechender Stelle so geformt, daß er mit den Ansätzen des inneren Bremsklotzes nicht in Berührung kommt.

### Bezugszeichenliste

- 1: Bremsträger
- 2: Tragarm
- 3: Tragarm
- 4: Bremsklotz
- 5: Tragteil
- 6: Tragteil
- 7: Schwimmsattel
- 8: Ansatz
- 9: Ansatz
- 10: Gehäusefeder
- 11: Sattelbrücke
- 12: Ausläufer
- 13: Ausläufer
- 14: Nut
- 15: Nut
- 16: Stützfläche
- 17: Stützfläche
- 18: Stützfläche
- 19: Stützfläche
- 20: Stirnfläche
- 21: Stirnfläche
- 22: Seitenfläche
- 23: Seitenfläche

## Patentansprüche

1. Schwimmsattel-Teilbelagscheibenbremse, insbesondere für Kraftfahrzeuge, mit einem Bremsträger (1), der zwei sich im wesentlichen in axialer Richtung erstreckende und in Umfangsrichtung der Bremsscheibe in Abstand voneinander angeordnete Tragarme (2,3) aufweist, mit zwei jeweils eine Belagträgerplatte aufweisenden Bremsklötzen (4), die über jeweils zwei im wesentlichen in Umfangsrichtung wegstehende Tragteile (5,6) ihrer Belagträgerplatte an den Tragarmen (2,3) des Bremsträgers (1) axial verschiebbar geführt sind und mit den Tragarmen (2,3) derart zusammenwirken, daß zumindest bei großen Bremsanlegekräften die an einem Bremsklotz (4) auftretende Reibungskraft auf beide Tragarme (2,3) übertragen wird, mit einem am Bremsträger (1) mittels zweier Bolzen elastisch oder mit Spiel und axial verschiebbar geführten faustförmigen Schwimmsattel (7), der eine hydraulische Betätigungsvorrichtung und eine die Bremsscheibe außen umgreifende Sattelbrücke (11) aufweist und zum Andruck der Bremsklötze (4) an die Bremsscheibe bestimmt ist, und mit einer den Schwimmsattell (7) gegen den Bremsträger (1) verspannenden Gehäusefeder, wobei die Sattelbrücke (11) des Schwimmsattels (7) zur Erhöhung ihrer Steifigkeit zwei sich in Umfangsrichtung der Bremsscheibe nach außen bis über die Tragteile (5,6) der Bremsklötze (4) erstreckende und in axialer Richtung entlang der Tragarme (2,3) des Bremsträgers (1) verlaufende Ausläufer (12,13) aufweist,
dadurch gekennzeichnet, daß
in die genannten Ausläufer (12,13) zumindest in ihrem den axial äußeren Bremsklotz (4) überspannenden Bereich axial verlaufende und zu den Tragteilen (5,6) des Bremsklotzes (4) hin offene Nuten (14,15), vorzugsweise durch Fräsen eingebracht sind, und daß der axial äußere Bremsklotz (4) an seinen Tragteilen (5,6) Ansätze (8,9) aufweist, die sich in die genannten Nuten (14,15) hinein erstrecken und mit deren Innenflächen (16,17,18,19) in Anlage kommen, wobei der Schwimmsattel (7) über die zwei Tragteile (5,6) des Bremsklotzes (4) am Bremsträger (1) in Umfangsrichtung und radial abgestützt wird.

2. Schwimmsattel-Teilbelagscheibenbremse nach Anspruch 1, dadurch **gekennzeichnet**, daß die zwei genannten, axial verlaufenden Nuten (14,15) des Schwimmsattels (7) je zwei bearbeitete, ebene Stützflächen (16,17,18,19) aufweisen, daß die erste Stützfläche (16,18) im wesentlichen parallel zu einer auf beiden Nuten (14,15) senkrecht stehenden Verbindungslinie ist und den Nutboden bildet, daß die zweite Stützfläche (17,19) auf der genannten Verbindungslinie im wesentlichen senkrecht steht und eine in Umfangsrichtung innere oder äußere Nutwand bildet und daß der axial äußere Bremsklotz (4) an seinen Tragteilen (5,6) Ansätze (8,9) aufweist, die sich in die Nuten (14,15) hinein erstrecken und etwas länger sind als die Nuttiefe, so daß die Stirnflächen (20,21) der Ansätze (8,9) mit den genannten ersten Stützflächen (16,18) am Nutboden und die zugehörigen Seitenflächen (22,23) der Ansätze (8,9) mit den genannten zweiten Stützflächen (17,19) an der Nutwand in Anlage kommen können.

3. Schwimmsattel-Teilbelagscheibenbremse nach Anspruch 2, dadurch **gekennzeichnet**, daß die zwei genannten, axial verlaufenden Nuten (14,15) des Schwimmsattels (7) seitlich jeweils nach außen oder nach innen hin offen sind, also neben den genannten Stützflächen (17,18,19,20) keine in Umfangsrichtung äußeren bzw. inneren Wandflächen aufweisen.

## Claims

1. A floating-caliper spot-type disc brake, in particular for automotive vehicles, with a brake carrier (1) which is furnished with two carrier arms (2, 3) substantially extending in axial direction and positioned at a distance from each other in the circumferential direction of the brake disc, with two brake shoes (4) which are each provided with a lining carrier plate and are axially slidingly guided at the carrier arms (2, 3) of the brake carrier (1) through two each carrier elements (5, 6) jutting substantially in circumferential direction and which interact with the carrier arms (2, 3) in such a manner that the frictional force occurring at one brake shoe (4) is transmitted to both carrier arms (2, 3) at least in the presence of elevated brake contact forces, with a fist-shaped floating caliper (7) being guided elastically or with play and axially slidingly at the brake carrier (1) by means of two pins, which floating caliper is furnished with a hydraulic actuating apparatus and with a caliper bridge (11) externally straddling the brake disc and being intended to urge the brake shoes (4) against the brake disc, and with a housing spring clamping the floating caliper (7) against the brake carrier (1), the caliper bridge (11) of the floating caliper (7) for the purpose of increasing its rigidity being formed with two extensions (12, 13) extending outwardly up to beyond the carrier elements (5, 6) of the brake shoes (4) and running in axial direction along the carrier arms (2, 3) of the brake carrier (1),
**characterized** in that into the said extensions (12, 13), at least in their range traversing beyond the axially external brake shoe (4), grooves (14, 15) extending in axial direction and being open in the direction of the carrier elements (5, 6) of the brake shoe (4) are fabricated, preferably by a milling operation, and in that at its carrier elements (5, 6) the axially external brake shoe (4) is formed with attachments (8, 9) which extend into the said grooves (14, 15) and come to be abutted against their inner surfaces (16, 17, 18, 19), the floating caliper (7) being supported in circumferential direction and radially at the brake carrier (1) through the two carrier elements (5, 6) of the brake shoe (4).

2. A floating-caliper spot-type disc brake as claimed in claim 1,
**characterized** in that the said two grooves (14, 15) of the floating caliper (7) extending in axial direction are each furnished with two machined, plane supporting surfaces (16, 17, 18, 19), in that the first supporting surface (16, 18) is substantially parallel to a connecting line being disposed at right angles with both grooves (14, 15) and forms the groove bottom, in that the second supporting surface (17, 19) is substantially disposed at right angles with the said connecting line and forms an internal or external groove wall in circumferential direction, and in that at its carrier elements (5, 6) the axially external brake shoe (4) is formed with attachments (8, 9) which extend into the grooves (14, 15) and which are slightly longer than the groove depth so that the front faces (20, 21) of the attachments (8, 9) are allowed to come to be abutted, with the said first supporting surfaces (16, 18), against the groove bottom, and the associated lateral surfaces (22, 23) of the attachments (8, 9) allow to come to be abutted, with the said second supporting surfaces (17, 19), against the groove wall.

3. A floating-caliper spot-type disc brake as claimed in claim 2,
**characterized** in that the said two axially extending grooves (14, 15) of the floating caliper (7) are each open laterally in outward direction or in inward direction, that is to say, that beyond the said supporting surfaces (17, 18, 19, 20) they are not provided with wall surfaces being disposed externally, respectively internally in circumferential direction.

## Revendications

1. Frein à disque à garniture partielle à étrier flottant, notamment pour véhicules automobiles, comprenant un support de frein (1) comportant deux bras de support (2, 3) s'étendant essentiellement dans le sens axial et espacés l'un de l'autre dans le sens de la circonférence du disque de frein, comprenant deux plaquettes de frein (4) comportant chacune une plaque-support de garniture, guidées de façon axialement coulissante sur les bras de support (2, 3) du support de frein (1), par l'intermédiaire de deux éléments de support (5, 6) de la plaque-support de garniture correspondante, ces éléments divergeant de la plaque essentiellement dans le sens de la circonférence, et ces plaquettes coopérant avec les bras de support (2, 3) de façon telle qu'au moins en présence d'efforts élevés de serrage des freins, la force de frottement créée au niveau de l'une des plaquettes de frein (4) soit transmise aux deux bras de support (2, 3), et comprenant un étrier flottant (7) en forme de U, guidé élastiquement ou avec jeu sur le support de frein (1), et de façon à pouvoir coulisser axialement, au moyen de deux axes, cet étrier flottant comportant un dispositif d'actionnement hydraulique et un pont d'étrier (11) s'emboîtant sur par l'extérieur le disque de frein, et étant destiné à effectuer l'appui des plaquettes de frein (4) sur le disque de frein, et comportant un ressort de carter bridant l'étrier flottant (7) sur le support de frein (1), et dans lequel le pont d'étrier (11) de l'étrier flottant (7) comporte, en vue d'augmenter la rigidité de ce pont, deux extrémités (12, 13) s'étendant vers l'extérieur, dans le sens de la circonférence du disque de frein, jusqu'au-delà des éléments de support (5, 6) des plaquettes de frein (4) et longeant, dans le sens axial, les bras de support (2, 3) du support de frein (1),
caractérisé en ce que des rainures (14, 15) s'étendant dans le sens axial sont agencées dans lesdites extrémités (12, 13), au moins dans la zone de celles-ci, qui recouvre la plaquette de frein axialement extérieure (4), les rainures étant ouvertes face aux éléments de support (5, 6) de la plaquette de frein (4) et étant de préférence usinées par fraisage,
et en ce que la plaquette de frein axialement extérieure (4) comporte des appendices (8, 9) formés sur ses éléments de support (5, 6), qui s'étendent à l'intérieur des rainures (14, 15) et entrent en contact avec les faces intérieures (16, 17, 18, 19) de celles-ci, l'étrier flottant (7) étant alors supporté dans le sens de la circonférence et dans le sens radial par le support de frein (1), par l'intermédiaire des deux éléments de support (5, 6) de la plaquette de frein (4).

2. Frein à disque à garniture partielle à étrier flottant selon la revendication 1, caractérisé en ce que les deux dites rainures axiales (14, 15) de l'étrier flottant (7) comportent chacune deux faces d'appui usinées planes, en ce que la première face d'appui (16, 18) est essentiellement parallèle à une ligne de liaison perpendiculaire aux deux rainures (14, 15) et forme le fond de la rainure, en ce que la deuxième face d'appui (17, 19) est essentiellement perpendiculaire à ladite ligne de liaison et forme une paroi intérieure ou extérieure de la rainure, dans le sens de la circonférence, et en ce que la plaquette de frein axialement extérieure (4) présente, sur ses éléments de support (5, 6), des appendices (8, 9) qui s'étendent à l'intérieur des rainures (14, 15) et dont la longueur dépasse légèrement la profondeur des rainures, de manière que les faces frontales (20, 21) des appendices (8, 9) puissent entrer en contact avec lesdites premières faces d'appui (16, 18) situées au fond de la rainure, et que les faces latérales associées (22, 23) des appendices (8, 9) puissent entrer en contact avec lesdites secondes faces d'appui (17, 19) des parois de la rainure.

3. Frein à disque à garniture partielle à étrier flottant selon la revendication 2, caractérisé en ce que les deux dites rainures axiales (14, 15) de l'étrier flottant (7) sont ouvertes sur le côté respectif intérieur ou extérieur, c'est-à-dire qu'elles ne présentent pas de faces de parois extérieures ou intérieures, dans le sens de la circonférence, qui soient contiguës aux dites faces d'appui (17, 18, 19, 20).
